(19) Europäisches Patentamt
European Patent Office
Office européen des brevets

(11) **EP 3 828 507 B1**

(12) **EUROPÄISCHE PATENTSCHRIFT**

(45) Veröffentlichungstag und Bekanntmachung des Hinweises auf die Patenterteilung:
**19.01.2022   Patentblatt 2022/03**

(21) Anmeldenummer: **19211950.1**

(22) Anmeldetag: **27.11.2019**

(51) Internationale Patentklassifikation (IPC):
**G01D 5/14** *(2006.01)*      **G01D 5/244** *(2006.01)*

(52) Gemeinsame Patentklassifikation (CPC):
**G01D 5/145; G01D 5/24466**

(54) **DREHGEBER UND VORRICHTUNGEN ZUR ÜBERWACHUNG EINER DREHBEWEGUNG EINES DREHGEBERS**

ROTARY ENCODER AND DEVICE FOR SURVEILLANCE OF A ROTARY ENCODER

CAPTEUR ROTATIF ET DISPOSITIF DE SURVEILLANCE D'UN CAPTEUR ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.06.2021   Patentblatt 2021/22**

(73) Patentinhaber: **SICK AG**
**79183 Waldkirch (DE)**

(72) Erfinder: **SAUMER, Markus**
**77955 Ettenheim (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
EP-A1- 0 646 797      EP-A1- 2 746 732
EP-A1- 3 086 464      DE-A1-102010 051 873

**Beschreibung**

Die Erfindung betrifft Drehgeber und Vorrichtungen zur Überwachung einer Drehbewegung eines Drehgebers.

Die Überwachung von Drehgebern, insbesondere von Drehgebern mit analogen Signalverläufen, erfolgt üblicherweise mit integrierten Bausteinen, die die Vektorlänge von Drehsignalen analog überwachen. Hiermit kann die korrekte Funktion des Drehgebers mit einer hohen Fehlerabdeckung überwacht werden.

Aus DE 10 2010 051 873 A1 ist eine integrierte Schaltungsanordnung bekannt, welche wenigstens zwei Signaleingänge zum Zuführen eines ersten und zweiten Eingangssignals, wenigstens eine erste und eine zweite Auswerteschaltung zum Erkennen fehlerhafter Eingangsignale und wenigstens einen Signalausgang zum Bereitstellen eines Ausgangssignals umfasst, wobei bei Erkennen eines fehlerhaften Eingangssignals an dem Signalausgang ein Fehlersignal ausgegeben wird.

EP 0 646 797 A1 betrifft eine Motordrehbeurteilungsschaltung zur verlässlichen Unterscheidung zwischen einem Motorstoppzustand und einem Motordrehzustand.

EP 2 746 732 A1 offenbart eine Gebervorrichtung zur Bestimmung einer Position eines ersten Objekts relativ zu einem gegenüber dem ersten Objekt beweglichen zweiten Objekt, wobei die Gebervorrichtung eine mit dem ersten Objekt verbundene Maßverkörperung und eine mit dem zweiten Objekt verbundenen Abtasteinrichtung zur Erzeugung eines ersten Signals und eines zweiten Signals in Abhängigkeit von der Position aus einer Abtastung der Maßverkörperung sowie eine Überwachungseinheit zur Erkennung einer Fehlfunktion der Gebervorrichtung anhand des ersten Signals und des zweiten Signals aufweist. Dabei weist die Überwachungseinheit mindestens eine Spitzenwerthalteeinrichtung auf, um mindestens einen Extremwert des ersten Signals und/oder des zweiten Signals zu speichern.

Die exakte Überwachung der Vektorlänge mit diskreten Bauteilen ist sehr aufwendig. Am Markt verfügbare Lösungen sind auf eine Frequenz von 100 kHz beschränkt. Lösungen in Software benötigen eine sehr hohe Abtastfrequenz und eine nicht vertretbare Rechenleistung.

Es ist Aufgabe der Erfindung eine kostengünstige Lösung mit Standardbauteilen für eine funktional sichere Auswertung von Drehgebern (beispielsweise mit Sinus- und Cosinus-Signalen) bereitzustellen.

Die Lösung der Aufgabe erfolgt durch eine Vorrichtung zur Überwachung einer Drehbewegung eines Drehgebers mit den Merkmalen des Anspruchs 1 und einen Drehgeber mit den Merkmalen des Anspruchs 12.

Eine erfindungsgemäße Vorrichtung zur Überwachung einer Drehbewegung eines Drehgebers (in anderen Worten: Drehwinkelgeber; englisch: (Rotary) Encoder) umfasst: einen ersten Eingang, eingerichtet zum Empfangen eines ersten Drehsignals des Drehgebers; einen zweiten Eingang, eingerichtet zum Empfangen eines zweiten Drehsignals des Drehgebers; eine Mehrzahl von ersten Komparatoren, eingerichtet zum Vergleichen des ersten Drehsignals mit einer Mehrzahl von ersten Schaltschwellen (in anderen Worten: mit einer Mehrzahl von ersten Schwellwerten), um eine Mehrzahl von ersten Vergleichsergebnissen zu erhalten; eine Mehrzahl von zweiten Komparatoren, eingerichtet zum Vergleichen des zweiten Drehsignals mit einer Mehrzahl von zweiten Schaltschwellen (in anderen Worten: mit einer Mehrzahl von zweiten Schwellwerten), um eine Mehrzahl von zweiten Vergleichsergebnissen zu erhalten; und eine Mehrzahl von Logik-Schaltelementen, eingerichtet zum Verknüpfen der Mehrzahl von ersten Vergleichsergebnissen und der Mehrzahl von zweiten Vergleichsergebnissen, um ein Überwachungsergebnis zu erhalten.

In anderen Worten ist die Vorrichtung eingerichtet zum Ermitteln eines Überwachungsergebnisses basierend auf einem Vergleich des ersten Drehsignals mit vorgegebenen ersten Schaltschwellen, basierend auf einem Vergleich des zweiten Drehsignals mit vorgegebenen zweiten Schaltschwellen (die identisch oder verschieden sein können von den ersten Schaltschwellen) und einer logischen Verknüpfung der Vergleichsergebnisse. Sowohl die Vergleiche als auch die logischen Verknüpfungen werden durch elektronische Schaltungselemente realisiert.

Durch die Vorrichtung wird eine Vektorlängenüberwachung mit orthogonalen Vielecken realisiert.

Die Überwachung der Drehbewegung kann eine Überwachung sein, ob das erste Drehsignal und das zweite Drehsignal (zumindest näherungsweise) Koordinaten eines Kreises mit vorgegebenem Radius sind.

In einem orthogonalen Koordinatensystem beschreiben die beiden Größen sin und cos einen Kreis. Dieser Kreis kann erfindungsgemäß mit einer oder mehreren Schwellen überwacht werden, die vorteilhafterweise einen Kreis nachbilden oder annähern. Nähert man den Kreis im einfachsten Fall durch ein oder zwei Vierecke an, so kann diese Figur durch einfache Schwellwertvergleicher und logische Verknüpfung beschrieben werden. Fügt man Schwellwertvergleicher den beiden Koordinaten hinzu, ergeben sich orthogonale Vielecke, die sich ebenfalls durch Vergleiche und logische Verknüpfungen beschreiben lassen, was sowohl für den diskreten Aufbau wie auch bei Realisierung als intergierten Baustein Vorteile bietet.

Die Erfindungsgemäße Lösung ist sehr kostengünstig und ermöglicht eine Überwachung in Echtzeit bei sehr hohen Frequenzen.

In einer Ausgestaltung der Vorrichtung kann das erste Drehsignal einen zeitlichen Verlauf einer Drehwinkelposition eines ersten Referenzpunktes des Drehgebers repräsentieren und das zweite Drehsignal einen zeitlichen Verlauf einer Drehwinkelposition eines zweiten Referenzpunktes des Drehgebers repräsentieren.

Die zeitlichen Verläufe der Drehwinkelpositionen des ersten Referenzpunkts und des zweiten Referenzpunkts können dabei im üblichen Betrieb des Drehgebers ermittelt werden, sodass keine zusätzlichen Daten, die nicht schon im normalen Betrieb des Drehgebers verfügbar sind, ermittelt werden müssen.

Vorteilhafterweise liegen der erste Referenzpunkt und der zweite Referenzpunkt um einen Drehwinkel von 90° voneinander entfernt.

Damit können dann das erste Drehsignal und das zweite Drehsignal um 90° phasenverschoben sein, sodass das erste Drehsignal beispielsweise ein sinusförmiges Signal und das zweite Drehsignal ein cosinusförmiges Signal sein kann. Wenn dann das erste Drehsignal und das zweite Drehsignal als Koordinaten aufgefasst werden, ergibt eine Darstellung des ersten Drehsignals und des zweiten Drehsignal bei ordnungsgemäßer Funktion des Drehgebers einen Kreis. Dazu kann eine Überwachung über eine analoge Nachbildung der mathematischen Gleichung $\sin^2 + \cos^2 = 1$ erfolgen, wobei diese Gleichung beispielsweise mit diskreten Bauteilen nachgebildet werden kann.

In einer Ausgestaltung der Vorrichtung kann die Anzahl der ersten Schaltschwellen und die Anzahl der zweiten Schaltschwellen vorgegeben sein basierend auf einer vorgegebenen zu erzielenden Genauigkeit der Überwachung.

Es wird verstanden werden, dass bei Annäherung des Kreises über ein orthogonales Vieleck die Annäherung umso besser werden kann, je höher die Anzahl der Ecken des Vieleck ist, also je höher die Anzahl der Schaltschwellen ist.

Wenn die Annäherung des Kreises beispielsweise durch ein 12-Eck realisiert wird, beträgt die Abweichung der zu überwachenden Vektorlänge zum idealen Kreis ca. 22%. Dies ist für viele Anwendungszwecke ausreichend. Bei Realisierung über ein orthogonales 12-Eck kann das 12-Eck durch Überlagerung von zwei Rechtecken dargestellt werden. Der Kreis wird dann durch ein äußeres 12-Eck und ein inneres 12-Eck angenähert, so dass insgesamt vier Rechtecke zu überwachen sind. Für die Überwachung jedes Rechtecks können vier Komparatoren eingesetzt werden (jeweils zwei Komparatoren zur Überwachung der x-Komponente und der y-Komponente), so dass zur Annäherung des Kreises über zwei 12-Ecke insgesamt 16 Komparatoren eingesetzt werden können.

In einer Ausgestaltung der Vorrichtung können die ersten Schaltschwellen und zweiten Schaltschwellen Koordinaten eines ersten Kreises und eines zweiten Kreises darstellen.

Dadurch kann dann trotz Annäherung oder Approximation des Kreises, der durch das erste Drehsignal und das zweite Drehsignal im fehlerfreien Betrieb des Drehreglers vorgegeben ist, eine zuverlässige Bestimmung des Überwachungsergebnisses erreicht werden.

Vorteilhafterweise ist ein Radius des ersten Kreises kleiner als der vorgegebene Radius und ein Radius des zweiten Kreises größer als der vorgegebene Radius.

Der erste Kreis kann dann Ecken eines inneren Polygons und der zweite Kreis Ecken eines äußeren Polygons enthalten.

In einer Ausgestaltung der Vorrichtung kann für einen festen ganzzahligen Wert von m eine n-te erste Schaltschwelle oder eine n-te zweite Schaltschwelle bei vorgegebenem Radius von 1 vorgegeben sein als zumindest ungefähr

$$\sqrt{\frac{m-n}{m}}.$$

Die Zahl m gibt dabei die Anzahl der Ecken der Polygone pro Quadrant an (sodass jedes Polygon 4*m Ecken hat). Für ein 12-Eck ergibt sich also m=3.

Damit ergeben sich dann die in Tabelle 1 angegebenen Schaltschwellen xn und yn.

| Schaltschwelle xn, yn | 1 | 2 | 3 | 4 | 5 | 6 |
|---|---|---|---|---|---|---|
| 0 | 1,000 | 1,000 | 1,000 | 1,000 | 1,000 | 1,000 |
| 1 | | 0,707 | 0,816 | 0,866 | 0,894 | 0,913 |
| 2 | | | 0,577 | 0,707 | 0,775 | 0,816 |
| 3 | | | | 0,500 | 0,632 | 0,707 |
| 4 | | | | | 0,447 | 0,577 |
| 5 | | | | | | 0,408 |

Tabelle 1.

In einer Ausgestaltung der Vorrichtung hat der erste Kreis einen Radius von zumindest ungefähr 1 und/ oder der zweite Kreis einen Radius von zumindest ungefähr $\sqrt{\frac{m+1}{m}}$.

Vorteilhafterweise ist die Vorrichtung eingerichtet zum Ermitteln des Überwachungsergebnisses, ohne ein

# EP 3 828 507 B1

Vergleichen des ersten Drehsignals mit dem zweiten Drehsignal auszuführen.

Es werden also nur Vergleiche des ersten Drehsignals mit Schaltschwellen und Vergleiche des zweiten Drehsignals mit Schaltschwellen durchgeführt, aber keine Vergleiche des ersten Drehsignals mit dem zweiten Drehsignal. Dadurch kann die Ermittlung des Überwachungsergebnisses vereinfacht werden.

Die Aufgabe der Erfindung wird ferner durch einen Drehgeber mit der oben beschriebenen Vorrichtung gelöst.

Vorteilhafterweise umfasst der Drehgeber ferner Messmittel zum Aufnehmen des ersten Drehsignals und Messmittel zum Aufnehmen des zweiten Drehsignals.

Die Messmittel können Messmittel sein, die im normalen Betrieb des Drehgebers bereits Einsatz finden, sodass zur Ermittlung des Überwachungsergebnisses keine zusätzlichen Messmittel erforderlich sind. Die Messmittel können beispielsweise eine sich mit einer Welle drehende Codescheibe optisch abtasten/erfassen.

In einer Ausgestaltung umfasst der Drehgeber ferner eine Ausgabeeinheit, die zum Ausgeben eines Warnsignals basierend auf dem Überwachungsergebnis eingerichtet ist, und/oder eine Abschalteinheit, die zum Abschalten des Drehgebers basierend auf dem Überwachungsergebnis eingerichtet ist.

Damit kann der Drehgeber in geeigneter Weise auf das Überwachungsergebnis reagieren, wenn beispielsweise ein Fehler des Drehgebers erkannt wird (also wenn die Signale zu weit von dem gewünschten Kreis entfernt sind). Beispielsweise kann in einem solchen Fall eine Warnung ausgegeben werden, oder es kann der Betrieb komplett eingestellt werden. Beispielsweise kann auch ermittelt werden, wie weit die Signale von dem gewünschten Kreis entfernt sind (beispielsweise durch Hinzufügen weiterer Rechtecke zur Überwachung), und dann kann (z.B. bei kleinem Abstand, beispielsweise einem Abstand, der weniger als einen vorgegebenen Schwellwert, der durch Komparatoren überwacht werden kann, vom Kreis entfernt liegt) ein Warnsignal ausgegeben werden, oder (z.B. bei größerem Abstand, beispielsweise einem Abstand, der mehr als den vorgegebenen Schwellwert vom Kreis entfern liegt) der Drehgeber (und ggf. damit verbundene Geräte) abgeschaltet werden.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:

Fig. 1 ein Blockschaltbild einer Vorrichtung zur Überwachung einer Drehbewegung eines Drehgebers gemäß einer Ausführungsform;

Fig. 2 eine Illustration des ersten Drehsignals und des zweiten Drehsignals gemäß einer Ausführungsform;

Fig. 3 eine Darstellung des ersten Drehsignals und des zweiten Drehsignals in einer anderen Darstellung gemäß einer Ausführungsform;

Fig. 4 eine Darstellung, in der ein inneres Polygon und ein äußeres Polygon jeweils als orthogonales 12-Eck ausgeführt sind gemäß einer Ausführungsform; und

Fig. 5 eine Schaltung für die erfindungsgemäße Überprüfung.

Nachfolgend wird die erfindungsgemäße Vorrichtung exemplarisch anhand von Ausführungsbeispielen erläutert.

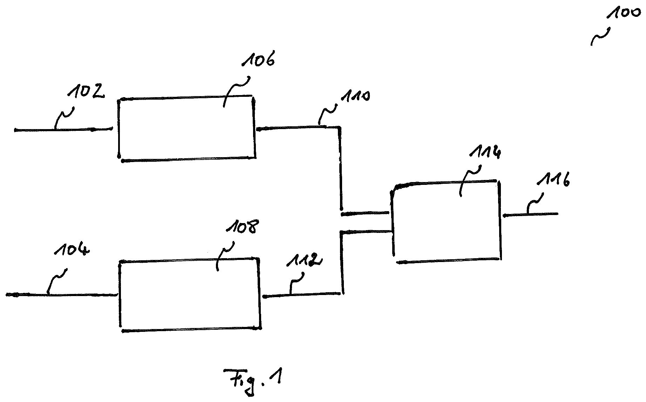

Fig. 1 zeigt ein Blockschaltbild einer Vorrichtung 100 zur Überwachung einer Drehbewegung eines Drehgebers gemäß einer Ausführungsform. Die Vorrichtung 100 enthält einen ersten Eingang 102 und einen zweiten Eingang 104. Der erste Eingang 102 ist zum Empfangen eines ersten Drehsignals des Drehgebers eingerichtet. Der zweite Eingang 104 ist zum Empfangen eines zweiten Drehsignals des Drehgebers eingerichtet. Der Vorrichtung 100 enthält ferner eine Mehrzahl von ersten Komparatoren 106 und eine Mehrzahl von zweiten Komparatoren 108. Die Mehrzahl von ersten Komparatoren 106 ist eingerichtet zum Vergleichen des ersten Drehsignals mit einer Mehrzahl von ersten Schaltschwellen, um eine Mehrzahl von ersten Vergleichsergebnissen 110 zu erhalten. Die Mehrzahl von zweiten Komparatoren 108 ist eingerichtet zum Vergleichen des zweiten Drehsignals mit einer Mehrzahl von zweiten Schaltschwellen, um eine Mehrzahl von zweiten Vergleichsergebnissen 112 zu erhalten. Die Vorrichtung 100 enthält ferner eine Mehrzahl von Logik-Schaltelementen 114, eingerichtet zum Verknüpfen der Mehrzahl von ersten Vergleichsergebnissen 110 und der der Mehrzahl von zweiten Vergleichsergebnissen 112, um ein Überwachungsergebnis 116 zu erhalten.

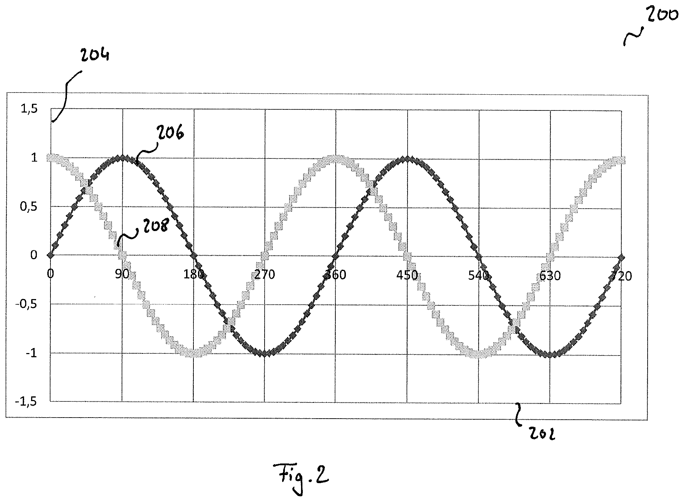

Fig. 2 zeigt eine Illustration 200 des ersten Drehsignals 206 und des zweiten Drehsignals 208 gemäß einer Ausführungsform. Auf einer horizontalen Achse 202 ist die Zeit aufgetragen, und über einer vertikalen Achse 204 ist der Wert des zeitlichen Verlaufs des ersten Drehsignals 206 und des zweiten Drehsignals 208 aufgetragen.

Dabei kann das erste Drehsignal 206 einen zeitlichen Verlauf einer Drehwinkelposition eines ersten Referenzpunktes des Drehgebers und das zweite Drehsignal 208 einen zeitlichen Verlauf einer Drehwinkelposition eines zweiten Referenzpunktes des Drehgebers repräsentieren. Im dargestellten Beispiel sind der erste Referenzpunkt und der zweite Referenzpunkt um einen Drehwinkel von 90° voneinander entfernt. Beispielsweise kann dann das erste Drehsignal 206 ein sinusförmiges Signal sein, und das zweite Drehsignal 208 kann ein cosinusförmiges Signal sein.

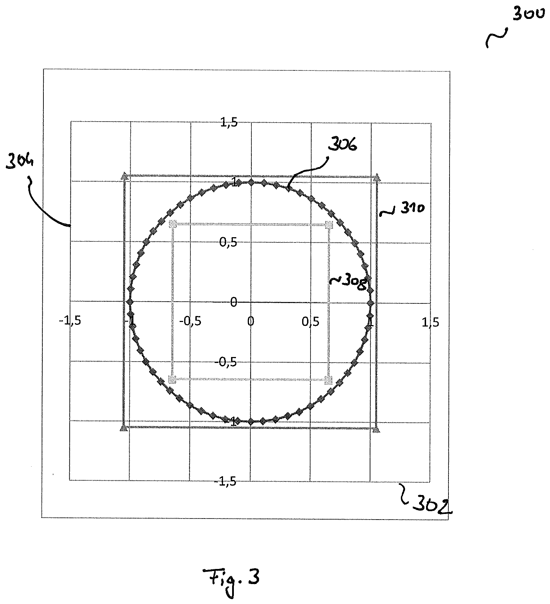

Fig. 3 zeigt eine Darstellung 300 des ersten Drehsignals 206 und des zweiten Drehsignals 208 in einer anderen Darstellung gemäß einer Ausführungsform. Das erste Drehsignal 206 ist über einer horizontalen Achse 302 aufgetragen, und das zweite Drehsignal 208 ist über einer vertikalen Achse 304 aufgetragen. So ergibt sich ein Kreis 306, dessen Koordinaten das erste Drehsignal 206 und das zweite Drehsignal 208 sind.

Falls der Drehgeber nicht richtig funktioniert, beispielsweise weil eine Achse des Drehgebers deplatziert ist, oder weil der erste Referenzpunkt oder der zweite Referenzpunkt sich verschoben haben, ergibt sich kein Kreis 306, sondern beispielsweise eine von einem Kreise verschiedene Ellipse. Um nun zu überprüfen, ob der Drehgeber richtig funktioniert, kann also überprüft werden, ob das erste Drehsignal 206 und das zweite Drehsignal 208 in einer Darstellung mit Achsen wie in Fig. 3 gezeigt einen Kreis ergeben. Das Überwachungsergebnis 116 der Vorrichtung 100 kann also beispielsweise angeben, ob das erste Drehsignal und das zweite Drehsignal Koordinaten eines Kreises mit vorgegebenem Radius sind.

Erfindungsgemäß wird überprüft, ob die Darstellung des ersten Drehsignals 206 und des zweiten Drehsignals 208 einen Kreis ergibt, dadurch, dass überprüft wird, ob die Darstellung komplett innerhalb eines vorgegebenen äußeren orthogonalen Polygons (Vieleck) 310 liegt und gleichzeitig komplett außerhalb eines vorgegebenen inneren Polygons 308 liegt.

Wie in Fig. 3 dargestellt, können sowohl das äußere Polygon 310 als auch das innere Polygon 308 jeweils Quadrate sein.

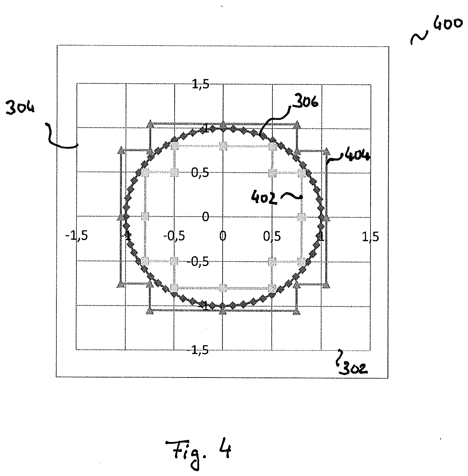

Fig. 4 zeigt eine Darstellung 400, in der ein inneres Polygon 402 und ein äußeres Polygon 404 jeweils als orthogonales 12-Eck ausgeführt sind gemäß einer Ausführungsform.

Die Überprüfung, ob das erste Drehsignal 206 und des zweite Drehsignal 208 eine kreisförmige Darstellung liefern (bzw. eine Darstellung liefern, die komplett innerhalb eines äußeren Polygons und komplett außerhalb eines inneren Polygons liegt), wird erfindungsgemäß durch Vergleich des ersten Drehsignal 206 mit vorgegebenen ersten Schaltschwellen und Vergleich des zweiten Drehsignal 208 mit vorgegebenen zweiten Schaltschwellen erreicht, wobei die Vergleichsergebnisse logisch miteinander verknüpft werden, um das Überwachungsergebnis zu erhalten.

Im Folgenden wird dieses erfindungsgemäße Vergleichen und logische Verknüpfen für den in Fig. 3 gezeigten Fall von Quadraten als inneres Polygon 308 und äußeres Polygon 310 näher erläutert.

Die Quadrate können jeweils durch Schaltschwellen, die den Ecken der Quadrate entsprechen, beschrieben werden. Das innere Polygon 308 kann Ecken mit Koordinaten $(+/-x_{min}, +/-y_{min})$ haben, also die vier Ecken mit den Koordinaten $(x_{min}, y_{min})$, $(x_{min}, -y_{min})$, $(-x_{min}, -y_{min})$ und $(-x_{min}, y_{min})$. Das äußere Polygon 310 kann Ecken mit Koordinaten $(+/-x_{max}, +/-y_{max})$ haben, also die vier Ecken mit den Koordinaten $(x_{max}, y_{max})$, $(x_{max}, -y_{max})$, $(-x_{max}, -y_{max})$ und $(-x_{max}, y_{max})$.

Die Überprüfung, ob die Darstellung des ersten Drehsignals 206 und des zweiten Drehsignals 208 außerhalb des inneren Polygons 308 und innerhalb des äußeren Polygons 310 liegt, kann dann basierend auf Vergleichen des ersten Drehsignals 206 (welches kurz als x bezeichnet werden kann) mit den Schwellwerten $-x_{max}$, $-x_{min}$, $x_{min}$ und $x_{max}$ und Vergleichen des zweiten Drehsignals 208 (welches kurz als y bezeichnet werden kann) mit den Schwellwerten $-y_{max}$, $-y_{min}$, $y_{min}$ und $y_{max}$ ausgeführt werden. Ein Fehler in der Drehbewegung des Drehgebers kann beispielsweise durch einen logischen Wert 1 des Überwachungsergebnisses (welches kurz als e bezeichnet werden kann) repräsentiert werden, und vorliegen, wenn die Darstellung des ersten Drehsignals 206 und des zweiten Drehsignals 208 zumindest zu einem Zeitpunkt innerhalb des inneren Polygons 308 und/oder zumindest zu einem Zeitpunkt außerhalb des äußeren Polygons 310 liegt.

Der Wert von e kann dann wie folgt ermittelt werden:

$$e = ((x > -x_{min}) \text{ und } (x < x_{min}) \text{ und } (y > -y_{min}) \text{ und } (y < y_{min})) \text{ oder nicht}((x > -xmax) \text{ und } (x < xmax) \text{ und } (y > -y_{max}) \text{ und } (y < y_{max})).$$

Dabei ist der Ausdruck "(a>b)" für zwei Werte a und b (beispielsweise für zwei reelle Zahlen a und b) zu verstehen als logisch "1" (oder "wahr" oder "true"), falls a größer ist als b, also falls a>b, und als logisch "0" (oder "falsch" oder "false") andernfalls, also falls a kleiner oder gleich ist als b, also falls a<=b. Der Ausdruck "(a<b)" wird entsprechend verstanden werden. Die Ausdrücke "und", "oder" und "nicht" werden verstanden werden als logische Verknüpfungen oder logische Inversion.

Die erste Zeile der Formel für e überprüft dabei, ob die Darstellung innerhalb des inneren Polygons 308 liegt. Die zweite Zeile dieser Formel überprüft, ob die Darstellung nicht innerhalb (also außerhalb) des äußeren Polygons 310 liegt.

Die Ermittlung von e (also die Überprüfung) kann rein basierend auf Invertern, Komparatoren und logischen Schaltelementen wie Und-Gattern, Oder-Gattern und logischen Invertern realisiert werden.

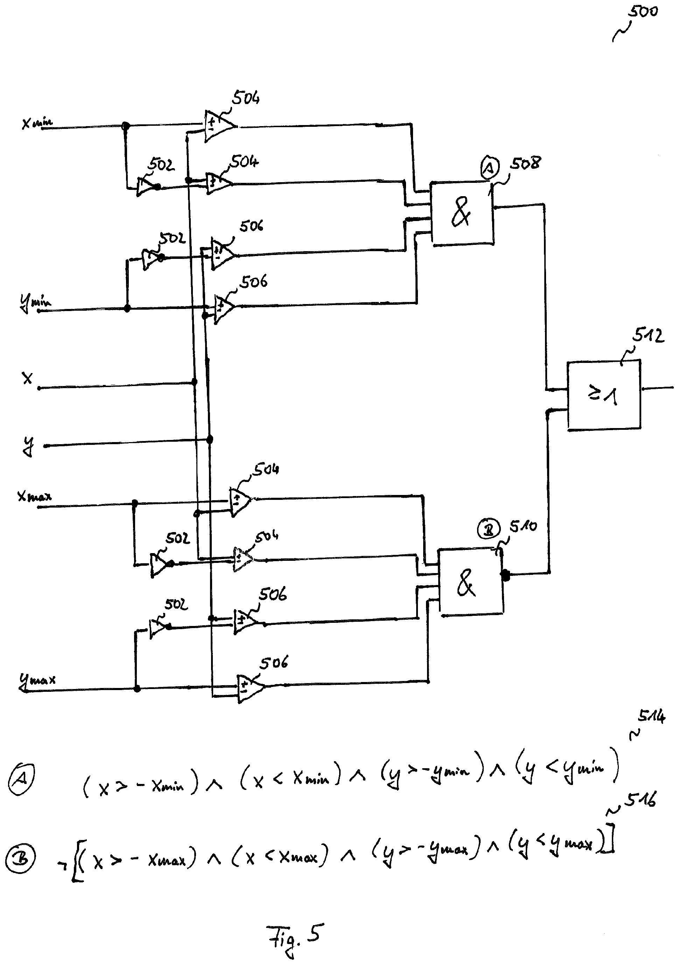

Fig. 5 zeigt eine Schaltung 500 für die erfindungsgemäße Überprüfung (also die Ermittlung des Werts von e, also die Implementierung auf Schaltungsebene der oben angegebenen Formel). Die erste Zeile der oben angegebenen Formel für e ist dabei als Boolescher Ausdruck mit Bezugszeichen 514 dargestellt, die zweite Zeile als Boolescher Ausdruck mit Bezugszeichen 516. Das Ergebnis der ersten Zeile wird durch Und-Gatter 508 ermittelt, das Ergebnis der zweiten Zeile durch Nicht-Und-Gatter 510, und die Ausgänge des Und-Gatters 508 und des Nicht-Und-Gatters 510 werden durch Oder-Gatter 512 verknüpft, um so den Wert von e zu erhalten.

Der Wert von x wird mittels einer Mehrzahl von ersten Komparatoren 504 mit den Schaltschwellen $+/-x_{min}$ ,und $+/-x_{max}$ verglichen. Der Wert von y wird mittels einer Mehrzahl von zweiten Komparatoren 506 mit den Schaltschwellen $+/-y_{min}$, und $+/y_{max}$ verglichen. Dabei werden die invertierten Werte von $x_{min}$, $y_{min}$, $x_{max}$ und $y_{max}$ (also $-x_{min}$, $-y_{min}$, $-x_{max}$ und $-y_{max}$) jeweils durch Inverter 502 bereitgestellt.

**Bezugszeichenliste**

| 100 | Vorrichtung zur Überwachung einer Drehbewegung |
| 102 | erster Eingang |
| 104 | zweiter Eingang |
| 106 | Mehrzahl von ersten Komparatoren |
| 108 | Mehrzahl von zweiten Komparatoren |
| 110 | Mehrzahl von ersten Vergleichsergebnissen |
| 112 | Mehrzahl von zweiten Vergleichsergebnissen |
| 114 | Logik-Schaltelemente |
| 116 | Überwachungsergebnis |

| 200 | Illustration des ersten Drehsignals und des zweiten Drehsignals |
| 202 | horizontale Achse |
| 204 | vertikale Achse |
| 206 | erstes Drehsignal |
| 208 | zweites Drehsignal |

| 300 | Darstellung des ersten Drehsignals und des zweiten Drehsignals |
| 302 | horizontale Achse |
| 304 | vertikale Achse |
| 306 | Kreis |
| 308 | inneres Polygon |
| 310 | äußeres Polygon |

| 400 | Darstellung einer Ausführung mit orthogonalen 12-Ecken |
| 402 | inneres Polygon |
| 404 | äußeres Polygon |

| 500 | Schaltung für erfindungsgemäße Überprüfung |
| 502 | Inverter |
| 504 | Mehrzahl von ersten Komparatoren |
| 506 | Mehrzahl von zweiten Komparatoren |
| 508 | Und-Gatter |
| 510 | Nicht-Und-Gatter |
| 512 | Oder-Gatter |
| 514 | Boolescher Ausdruck |
| 516 | Boolescher Ausdruck |

**Patentansprüche**

1.  Vorrichtung (100) zur Überwachung einer Drehbewegung eines Drehgebers, wobei die Vorrichtung aufweist:

    einen ersten Eingang (102), eingerichtet zum Empfangen eines ersten Drehsignals (206) des Drehgebers;
    einen zweiten Eingang (104), eingerichtet zum Empfangen eines zweiten Drehsignals (208) des Drehgebers;
    eine Mehrzahl von ersten Komparatoren (106), eingerichtet zum Vergleichen des ersten Drehsignals (206) mit einer Mehrzahl von ersten Schaltschwellen, um eine Mehrzahl von ersten Vergleichsergebnissen (110) zu erhalten;

eine Mehrzahl von zweiten Komparatoren (108), eingerichtet zum Vergleichen des zweiten Drehsignals (208) mit einer Mehrzahl von zweiten Schaltschwellen, um eine Mehrzahl von zweiten Vergleichsergebnissen (112) zu erhalten; und

eine Mehrzahl von Logik-Schaltelementen (114), eingerichtet zum Verknüpfen der Mehrzahl von ersten Vergleichsergebnissen (110) und der Mehrzahl von zweiten Vergleichsergebnissen (112), um ein Überwachungsergebnis (116) zu erhalten.

2. Vorrichtung (100) nach Anspruch 1,

wobei das erste Drehsignal (206) einen zeitlichen Verlauf einer Drehwinkelposition eines ersten Referenzpunktes des Drehgebers repräsentiert, und

wobei das zweite Drehsignal (208) einen zeitlichen Verlauf einer Drehwinkelposition eines zweiten Referenzpunktes des Drehgebers repräsentiert.

3. Vorrichtung (100) nach Anspruch 2,
wobei der erste Referenzpunkt und der zweite Referenzpunkt um einen Drehwinkel von 90° voneinander entfernt liegen.

4. Vorrichtung (100) nach einem der vorstehenden Ansprüche,
wobei die Anzahl der ersten Schaltschwellen und die Anzahl der zweiten Schaltschwellen basierend auf einer vorgegebenen zu erzielenden Genauigkeit der Überwachung vorgegeben ist.

5. Vorrichtung (100) nach einem der vorstehenden Ansprüche,
wobei die Überwachung der Drehbewegung eine Überwachung aufweist, ob das erste Drehsignal (206) und das zweite Drehsignal (208) Koordinaten eines Kreises mit vorgegebenem Radius sind.

6. Vorrichtung (100) nach Anspruch 5,
wobei die ersten Schaltschwellen und zweiten Schaltschwellen Koordinaten eines ersten Kreises und eines zweiten Kreises darstellen.

7. Vorrichtung (100) nach Anspruch 6,
wobei ein Radius des ersten Kreises kleiner als der vorgegebene Radius ist, und wobei ein Radius des zweiten Kreises größer als der vorgegebene Radius ist.

8. Vorrichtung (100) nach einem der Ansprüche 6 bis 7,
wobei für einen festen ganzzahligen Wert von m eine n-te erste Schaltschwelle oder eine n-te zweite Schaltschwelle bei vorgegebenem Radius von 1 vorgegeben ist als zumindest ungefähr $\sqrt{\dfrac{m-n}{m}}$.

9. Vorrichtung (100) nach Anspruch 8,
wobei der erste Kreis einen Radius von zumindest ungefähr 1 besitzt.

10. Vorrichtung (100) nach einem der Ansprüche 8 oder 9,

wobei der zweite Kreis einen Radius von zumindest ungefähr $\sqrt{\dfrac{m+1}{m}}$ besitzt.

11. Vorrichtung (100) nach einem der vorstehenden Ansprüche,
wobei die Vorrichtung (100) eingerichtet ist zum Ermitteln des Überwachungsergebnisses, ohne ein Vergleichen des ersten Drehsignals mit dem zweiten Drehsignal auszuführen.

12. Drehgeber, aufweisend:
die Vorrichtung (100) nach einem der vorstehenden Ansprüche.

**13.** Drehgeber nach Anspruch 12, ferner aufweisend:

Messmittel zum Aufnehmen des ersten Drehsignals (206); und
Messmittel zum Aufnehmen des zweiten Drehsignals (208).

**14.** Drehgeber nach einem der Ansprüche 12 oder 13, ferner aufweisend:
eine Ausgabeeinheit, eingerichtet zum Ausgeben eines Warnsignals basierend auf dem Überwachungsergebnis (116).

**15.** Drehgeber nach einem der Ansprüche 12 bis 14, ferner aufweisend:
eine Abschalteeinheit, eingerichtet zum Abschalten des Drehgebers basierend auf dem Überwachungsergebnis (116).

**Claims**

**1.** An apparatus (100) for monitoring a rotational movement of a rotary encoder, wherein the apparatus has:

a first input (102) configured to receive a first rotary signal (206) of the rotary encoder;
a second input (104) configured to receive a second rotary signal (208) of the rotary encoder;
a plurality of first comparators (106) configured to compare the first rotary signal (206) with a plurality of first switching thresholds in order to obtain a plurality of first comparison results (110);
a plurality of second comparators (108) configured to compare the second rotary signal (208) with a plurality of second switching thresholds in order to obtain a plurality of second comparison results (112); and
a plurality of logic switching elements (114) configured to link the plurality of first comparison results (110) and the plurality of second comparison results (112) in order to obtain a monitoring result (116).

**2.** An apparatus (100) in accordance with claim 1,
wherein the first rotary signal (206) represents a time development of a rotary angle position of a first reference point of the rotary encoder, and wherein the second rotary signal (208) represents a time development of a rotary angle position of a second reference point of the rotary encoder.

**3.** An apparatus (100) in accordance with claim 2,
wherein the first reference point and the second reference point are spaced apart by an angle of rotation of 90°.

**4.** An apparatus (100) in accordance with any one of the preceding claims, wherein the number of first switching thresholds and the number of second switching thresholds are predefined based on a predefined accuracy of the monitoring to be achieved.

**5.** An apparatus (100) in accordance with any one of the preceding claims,
wherein the monitoring of the rotational movement comprises a monitoring whether the first rotary signal (206) and the second rotary signal (208) are coordinates of a circle having a predefined radius.

**6.** An apparatus (100) in accordance with claim 5,
wherein the first switching thresholds and the second switching thresholds represent coordinates of a first circle and a second circle.

**7.** An apparatus (100) in accordance with claim 6,
wherein a radius of the first circle is smaller than the predefined radius, and wherein a radius of the second circle is larger than the predefined radius.

**8.** An apparatus (100) in accordance with one of the claims 6 to 7, wherein, when the radius is predefined as 1, an nth first switching threshold or an nth second switching threshold is predefined as at least approximately $\sqrt{\dfrac{m-n}{m}}$ for a fixed whole-number value of m.

**9.** An apparatus (100) in accordance with claim 8,
wherein the first circle has a radius of at least approximately 1.

**10.** An apparatus (100) in accordance with one of the claims 8 or 9,

wherein the second circle has a radius of at least approximately $\sqrt{\dfrac{m+1}{m}}$ .

**11.** An apparatus (100) in accordance with any one of the preceding claims, wherein the apparatus (100) is configured to determine the monitoring result without performing a comparison of the first rotary signal with the second rotary signal.

**12.** A rotary encoder, comprising:
the apparatus (100) in accordance with any one of the preceding claims.

**13.** A rotary encoder in accordance with claim 12, further comprising:

measurement means for taking up the first rotary signal (206); and
measurement means for taking up the second rotary signal (208).

**14.** A rotary encoder in accordance with one of the claims 12 to 13, further comprising:
an output unit configured to output a warning signal based on the monitoring result (116).

**15.** A rotary encoder in accordance with any one of the claims 12 to 14, further comprising:
a shutdown unit configured to shut down the rotary encoder based on the monitoring result (116).

**Revendications**

**1.** Dispositif (100) de surveillance d'un mouvement de rotation d'un capteur rotatif, le dispositif comprenant :

une première entrée (102) conçue pour recevoir un premier signal de rotation (206) du capteur rotatif ;
une seconde entrée (104) conçue pour recevoir un second signal de rotation (208) du capteur rotatif ;
une pluralité de premiers comparateurs (106) conçus pour comparer le premier signal de rotation (206) à une pluralité de premiers seuils de commutation, afin d'obtenir une pluralité de premiers résultats de comparaison (110);
une pluralité de seconds comparateurs (108) conçus pour comparer le second signal de rotation (208) à une pluralité de seconds seuils de commutation, afin d'obtenir une pluralité de seconds résultats de comparaison (112) ; et
une pluralité d'éléments de commutation logiques (114) conçus pour combiner la pluralité de premiers résultats de comparaison (110) et la pluralité de seconds résultats de comparaison (112), afin d'obtenir un résultat de surveillance (116).

**2.** Dispositif (100) selon la revendication 1,

dans lequel le premier signal de rotation (206) représente une évolution dans le temps d'une position angulaire de rotation d'un premier point de référence du capteur rotatif, et
le second signal de rotation (208) représente une évolution dans le temps d'une position angulaire de rotation d'un second point de référence du capteur rotatif.

**3.** Dispositif (100) selon la revendication 2,
dans lequel le premier point de référence et le second point de référence sont espacés l'un de l'autre d'un angle de rotation de 90°.

**4.** Dispositif (100) selon l'une des revendications précédentes,
dans lequel le nombre de premiers seuils de commutation et le nombre de seconds seuils de commutation sont prédéfinis sur la base d'une précision de surveillance prédéfinie à atteindre.

**5.** Dispositif (100) selon l'une des revendications précédentes,
dans lequel la surveillance du mouvement de rotation inclut une surveillance pour savoir si le premier signal de rotation (206) et le second signal de rotation (208) sont des coordonnées d'un cercle de rayon prédéfini.

**6.** Dispositif (100) selon la revendication 5,
dans lequel les premiers seuils de commutation et les seconds seuils de commutation représentent des coordonnées d'un premier cercle et d'un second cercle.

**7.** Dispositif (100) selon la revendication 6,
dans lequel un rayon du premier cercle est inférieur au rayon prédéfini, et un rayon du second cercle est supérieur au rayon prédéfini.

**8.** Dispositif (100) selon l'une des revendications 6 à 7,
dans lequel, pour une valeur entière fixe de m, le rayon prédéfini étant de 1, un n-ième premier seuil de commutation ou un n-ième second seuil de commutation est prédéfini comme étant au moins approximativement $\sqrt{\dfrac{m-n}{m}}$ .

**9.** Dispositif (100) selon la revendication 8,
dans lequel le premier cercle possède un rayon d'au moins approximativement 1.

**10.** Dispositif (100) selon l'une des revendications 8 ou 9,
dans lequel le second cercle possède un rayon d'au moins approximativement $\sqrt{\dfrac{m+1}{m}}$ .

**11.** Dispositif (100) selon l'une des revendications précédentes,
le dispositif (100) étant conçu pour déterminer le résultat de surveillance sans effectuer de comparaison entre le premier signal de rotation et le second signal de rotation.

**12.** Capteur rotatif comprenant :
le dispositif (100) selon l'une des revendications précédentes.

**13.** Capteur rotatif selon la revendication 12, comprenant en outre :

des moyens de mesure pour capter le premier signal de rotation (206) ; et
des moyens de mesure pour capter le second signal de rotation (208).

**14.** Capteur rotatif selon l'une des revendications 12 ou 13, comprenant en outre :
une unité d'émission conçue pour émettre un signal d'alerte sur la base du résultat de surveillance (116).

**15.** Capteur rotatif selon l'une des revendications 12 à 14, comprenant en outre :
une unité de déconnexion conçue pour déconnecter le capteur rotatif sur la base du résultat de surveillance (116).

Fig. 1

Fig.2

Fig. 3

Fig. 4

Fig. 5

$$\text{(A)} \quad (x > -x_{min}) \wedge (x < x_{min}) \wedge (y > -y_{min}) \wedge (y < y_{min})$$

$$\text{(B)} \quad \neg[(x > -x_{max}) \wedge (x < x_{max}) \wedge (y > -y_{max}) \wedge (y < y_{max})]$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010051873 A1
- EP 0646797 A1
- EP 2746732 A1